# EUROPEAN PATENT SPECIFICATION

(11) **EP 3 039 543 B1**
(45) Date of publication and mention of the grant of the patent: **04.11.2020**
(21) Application number: 15716106.8
(22) Date of filing: 16.03.2015
(51) Int. Cl.: G06F 9/48, G06F 11/07, G06F 11/30

(54) **A MONITORING UNIT AS WELL AS METHOD FOR PREDICTING ABNORMAL OPERATION OF TIME-TRIGGERED COMPUTER SYSTEMS**
ÜBERWACHUNGSEINHEIT SOWIE VERFAHREN ZUR VORHERSAGE ANORMALER OPERATIONEN ZEITGESTEUERTER COMPUTERSYSTEME
UNITÉ DE SURVEILLANCE ET PROCÉDÉ DE PRÉVISION DE FONCTIONNEMENT ANORMAL DE SYSTÈMES INFORMATIQUES À DÉCLENCHEMENT TEMPOREL

(30) Priority: 11.05.2014 GB 201408285; 11.05.2014 GB 201408286
(43) Date of publication of application: 06.07.2016
(73) Proprietor: Safetty Systems Ltd, Great Dalby LE14 2EY (GB)
(72) Inventor: PONT, Michael Joseph, Great Dalby LE14 2EY (GB)
(74) Representative: Secerna LLP
(86) International application number: PCT/GB2015/000091
(87) International publication number: WO 2015/173533

(56) References cited:
- EP-A1- 2 528 283
- WO-A1-2007/054877
- WO-A1-2009/113034
- US-A1- 2008 215 927

## Description

### Field of the Invention

The present invention relates to an apparatus and a method which provides improved reliability and security for computer systems. In particular, the present invention relates to a monitoring unit for predicting abnormal operation of a time-triggered computer system, and a method of providing such a monitoring unit.

### Background to the Invention

A computer system is usually comprised of one or more "Commercial Off The Shelf" (COTS) processors - for example, microcontrollers or microprocessors - and some software that will execute on such processor(s): this software may be created, for example, using a programming language such as 'C' or Ada.

In many cases, processors are "embedded" inside larger systems, including cars, aircraft, industrial and agricultural machinery, medical equipment, white and brown goods and even in toys. It is estimated that people in the developed world encounter around 300 of such "embedded systems" every day while going about their normal activities.

Other related uses of computer systems include real-time "desktop" applications, such as air-traffic control and traffic management.

When creating such computer systems, developers must choose an appropriate system architecture. One such architecture is a "time-triggered" (TT) architecture. Implementation of a TT architecture will typically involve use of a single interrupt that is linked to the periodic overflow of a timer. This interrupt may drive a task scheduler (a simple form of "operating system"). The scheduler will - in turn - begin the execution of the system tasks (a process sometimes called "releasing" the tasks, "triggering" the tasks or "running" the tasks) at predetermined points in time. The tasks themselves are typically named blocks of program code that perform a particular activity (for example, a task may check to see if a switch has been pressed): tasks are often implemented as functions in programming languages such as 'C'.

This type of TT design can offer very predictable system behaviour, making it comparatively easy to test and verify the correct operation of real-time computer systems that are based on such an architecture: this is the main reason why TT designs are often used in safety-critical systems, high-integrity systems and in other products where system reliability and / or security are important design considerations.

Whatever system architecture is employed, it is very often important to try and ensure that the computer system functions correctly in the event that accidental errors (such as hardware failure and software errors that might be caused by electromagnetic interference - EMI - or radiation-related errors) or malicious errors (for example as may be caused by deliberate attempts to effect behavioural changes in either the processor or software, including - for example - the use of computer "viruses") occur. It is also generally accepted that - as computer systems become larger - it is inevitable that there will be some residual errors in the software in many systems that have been released into the field: it is clearly desirable that the system should not operate dangerously in the event of such residual errors.

It may be felt that the use of a "lockstep" processor (see, for example, Reference 1) offers a solution to the problems identified above. Lockstep designs typically involve two (sometimes more) processors that execute the same program code on two different processor units, with various forms of cross-checking (to detect errors). In most (but not all) cases, the lockstep solution will involve two or more processor units in close proximity: this gives rise to concerns about common-mode faults: for example, physical damage, vibration, humidity or radiation sources may have a similar impact on all processor units, causing errors to go undetected. If we can avoid such common-mode failures, lockstep processors may allow us to detect the impact of some errors (including, potentially, the impact of EMI), but they provide little or no protection against programming errors (including residual errors), or program changes (caused, for example, by viruses or deliberate tampering).

In addition to the use of lockstep processors, other techniques for detecting errors of the type outlined above have also been described previously. These include what is sometimes called "program flow monitoring" (PFM) techniques (see, for example, Reference 2). PFM typically involves hardware- or software based techniques for detecting deviations from normal system behaviour (for example, by monitoring bus activity and / or memory accesses and looking for changes in the "normal" signature). Another well-known way in which the impact of the above errors on computer systems can be detected is through the use of mechanisms such as "watchdog" timers (see, for example, Reference 3). Such watchdogs typically enforce a system halt or reset if they are not "fed" at the required frequency (and it is assumed - often implicitly - that system errors will interfere with this feeding process).

Overall, while use of lockstep processor architectures, and / or PFM and / or a watchdog timer may help to improve the reliability of a given system, such approaches will - in general - only confer an ability to respond to changes in the behaviour of systems that result from errors. By the time such changes are significant enough to be detected, a great deal of damage may already have been done. WO 2009/113034A1 discloses techniques for task management in multi-core processors. US 2008/215927 relates to computers executing in time-share mode, a number of separate and independent application programs.

For example, consider that we have detected an error in the braking system of a passenger car: if the driver is already applying the brakes in an emergency situation when we detect the error, the error-detection mechanism is of little value. Late detection of errors in aerospace systems, industrial systems, defence systems, medical systems, financial systems or even household goods may also result in injury, loss of human life and / or very significant financial losses.

Documents EP2528283 and WO2007054877 are related to the scheduling of network packets according to a predetermined schedule where a guardian monitors the scheduling order and if a packet a scheduled to be transmitted out of this order, the guardian does prevent this transmission beforehand.

It is therefore an object of embodiments of the present invention to improve the reliability and security of time-triggered computer systems by detecting errors before they result in serious consequences.

### Summary of the Invention

According to a first aspect of the present invention, there is provided a time-triggered computer system comprising:
a Main Processor comprising a time-triggered scheduler adapted to execute one or more tasks according to one or more predetermined task schedules, that are determined, validated and verified when the system is designed, and only one of which, an active task schedule, will be active at any point in time; and
a Monitor Processor adapted to determine in advance whether the Main Processor is about to execute a task that is not in accordance with the active task schedule using a Task Sequence Representation comprising a record of a sequence of task executions the Main Processor is expected to follow in the active task schedule; and
a Communication Link for passing information about future task executions between the Main Processor and the Monitor Processor; and
a Control Mechanism by means of which the Monitor Processor can halt or reset the Main Processor and shut down, disable, enable or configure connected devices that are under the control of the Main Processor, if the Monitor Processor determines that the Main Processor is about to execute a task that is not in accordance with the active task schedule.

In accordance with this aspect of the invention, a computer system is provided that executes scheduled tasks with a reduced likelihood of a critical failure.

The computer system is arranged to execute tasks in accordance with one or more predetermined task schedules. The task schedules determine the order in which tasks are executed and specify whether or not specific tasks are allowed to interrupt other tasks. The tasks are executed on the Main Processor.

Typically during operation, there is only ever one predetermined task schedule active at any particular point in time (that is, the "active task schedule").

Occasionally, due to programming errors, hardware defects or other unforeseen events, computer systems may execute the wrong task during the execution of a program. In certain applications this may result in a critical failure of the system as the Main Processor ceases to function predictably or ceases to function altogether. Depending on the application of the computer system, this could lead to highly undesirable consequences such as danger to life (for example in aviation control systems) or exposure to financial losses (for example in financial trading applications).

Unlike conventional systems, in accordance with this aspect of the invention, the computer system is provided with a Monitor Processor.

The Monitor Processor is arranged to obtain information from the Main Processor about at least some of the tasks that the Main Processor plans to execute before the tasks concerned are executed. This enables the Monitor Processor to determine in advance whether the Main Processor is about to execute a critical task that is not in accordance with the active task schedule. This provides the Monitor Processor with an opportunity to take appropriate corrective action, by virtue of a Control Mechanism, before the Main Processor executes a task that is not in accordance with the active task schedule. Such corrective action may - for example - include halting the Main Processor: when the Main Processor halts, this means that it will stop operating and will remain in a fixed state, typically until outside intervention occurs (for example, intervention by a trained operator). Alternatively, such corrective action may - for example - include resetting the Main Processor: when the Main Processor resets, this means that it will begin its operations again, from a known initial state. Further alternatively, such corrective action may include disabling devices that are under the control of the Main Processor: for example, this might mean removing power from a medical device that is being controlled by the Main Processor, thereby preventing harm to a patient.

The Main Processor and the Monitor Processor may each comprise one or more "soft" or "hard" processor cores (that execute some software) and / or one or more hardware cores (that do not execute any software).

Optionally, the Main Processor and the Monitor Processor will both be implemented by means of a single processor chip, such as a commercial-off-the-shelf (COTS) microcontroller or microprocessor, Digital Signal Processor (DSP), Field-Programmable Gate Array (FPGA), Application Specific Integrated Circuit (ASIC) or similar device.

Preferably, the Main Processor and the Monitor Processor will be implemented by means of separate processor chips.

Preferably, the Main Processor and the Monitor Processor will be physically separated.

Preferably, the Main Processor will comprise a time-triggered scheduler.

Preferably, the Monitor Processor will have access to at least one predetermined Task Sequence Representation, this Task Sequence Representation having been determined and stored at a time before the computer system begins to operate.

Optionally, the Monitor Processor will create one or more Task Sequence Representations during the system operation.

Optionally, the Monitor Processor will create one or more Task Sequence Representations during the system operation by recording the task sequence from the Main Processor at points during the system operation.

Optionally, each Task Sequence Representation will be stored in one or more data-storage devices.

Optionally, the Monitor Processor will not process information about the next task to be executed for every task in the active task schedule.

Optionally, the Control Mechanism will comprise a System Control output and / or a Reset Link, and I or a Communication Link B.

Optionally, the Monitor Processor will, by means of the Control Mechanism, cause the Main Processor to halt or reset, in situations where the Monitor Processor determines that the Main Processor is about to run a task that is not in accordance with the active task schedule.

Optionally, the process of halting the Main Processor in situations where the Monitor Processor determines that the Main Processor is about to run a task that is not in accordance with the active task schedule will further comprise an attempt to place the Main Processor into a safe state prior to halting the Main Processor.

Optionally, the Monitor Processor will signal an alarm if it determines that the Main Processor is about to execute a task that is not in accordance with the active task schedule.

Also disclosed herein but not claimed is a time-triggered computer system comprising a processor for running:
a Main Process adapted to execute one or more tasks according to one or more predetermined task schedules, only one of which, an active task schedule, will be active at any point in time; and
a Monitor Process adapted to determine whether the Main Processor is about to execute a task that is not in accordance with the active task schedule; and
a Communication Link for passing information about future task executions between the Main Process and the Monitor Process; and
a Control Mechanism by means of which the Monitor Process can halt or reset the Main Process and take other corrective actions involving devices to which the computer system is connected, if the Monitor Process determines that the Main Process is about to execute a task that is not in accordance with the active task schedule.

Also disclosed herein but not claimed is a method of controlling a time-triggered computer system that has been adapted to execute one or more tasks according to one or more predetermined task schedules, only one of which, an active task schedule, will be active at any point in time, the method comprising the steps of:
determining whether a task is about to be executed that is not in accordance with the active task schedule using a Task Sequence Representation comprising a record of a sequence of task executions expected to be followed in the active task schedule; and
controlling the execution of the one or more tasks comprising halting, or restarting, or replacing the one or more tasks, if it is determined that a task is about to be executed that is not in accordance with the active task schedule; and
controlling the operation of the one or more devices to which the computer system is connected, if it is determined that a task is about to be executed that is not in accordance with the active task schedule wherein controlling the operation of the one or more devices comprises shutting down, disabling, enabling or configuring the one or more devices.

Also disclosed herein but not claimed is provided a computer program product containing one or more sequences of machine- readable instructions, the instructions being adapted to cause one or more processors to provide a method comprising the steps of:
determining whether a task is about to be executed that is not in accordance with the active task schedule using a Task Sequence Representation comprising a record of a sequence of task executions expected to be followed in the active task schedule; and
controlling the execution of the one or more tasks comprising halting, or restarting, or replacing the one or more tasks, if it is determined that a task is about to be executed that is not in accordance with the active task schedule; and
   controlling the operation of the one or more devices to which the computer system is connected, if it is determined that a task is about to be executed that is not in accordance with the active task schedule wherein controlling the operation of the one or more devices comprises shutting down, disabling, enabling or configuring the one or more devices.

### Brief Description of the Figures

The present invention will now be described by way of example only and with reference to the accompanying figures in which:
Figure 1 illustrates in schematic form a sequence of task executions in a form that might be generated (for example) by a time-triggered co-operative (TTC) scheduler running on a Main Processor;
Figure 2 illustrates in schematic form an alternative sequence of task executions in a form that might be generated (for example) by a TTC scheduler running on a Main Processor in which the system ticks are not periodic;
Figure 3 illustrates in schematic form a sequence of task executions in a form that might be generated (for example) by a time-triggered hybrid (TTH) scheduler running on a Main Processor;
Figure 4 illustrates in schematic form the operation of a system in which the Main Processor executes different sets of tasks in different System Modes;
Figure 5 illustrates in schematic form one possible code framework for a TTC scheduler that might be employed on a Main Processor;
Figure 6 illustrates in schematic form the operation of a typical task dispatcher function from a TTC or TTH scheduler;
Figure 7 illustrates in schematic form one possible code framework for a TTH scheduler that might be employed on a Main Processor;

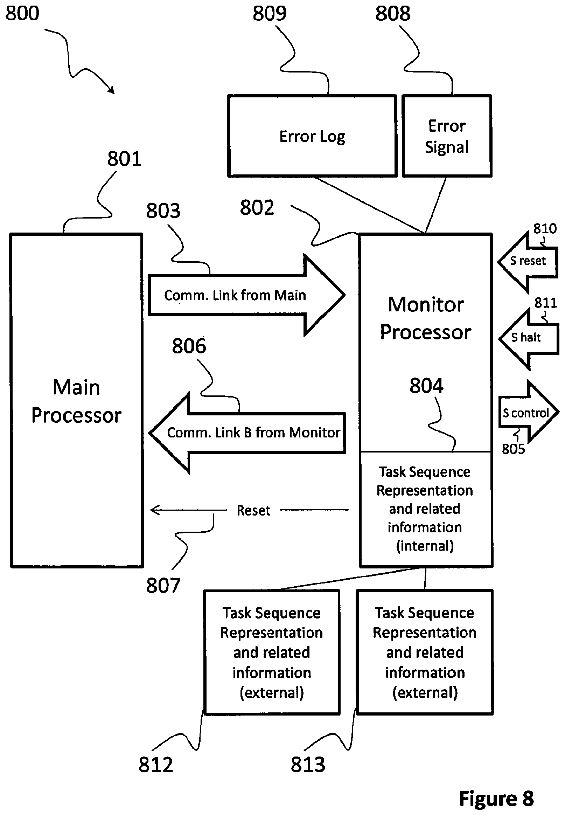

Figure 8 illustrates in schematic form an embodiment of a time-triggered computer system which comprises a Main Processor and a Monitor Processor, with an associated Communication Link (through which the Main Processor can send information about future task executions to the Monitor Processor), one internal and two external representations of the active Task Sequence Representation (recording the sequence of task executions that the Main Processor is expected to follow in the active System Mode), a System Control output (for controlling external devices and / or the computer system itself), a Reset Link (by means of which the Monitor Processor can halt or reset the Main Processor), a Communication Link B (by means of which the Monitor Processor can send messages to the Main Processor), an external Error Signal device (for signalling errors), an external Error Log device (for logging errors), in accordance with an aspect of the present invention;
Figure 9 illustrates in schematic form an embodiment of a time-triggered computer system (which comprises a Main Processor and a Monitor Processor) that is being used to control an industrial robot, in accordance with an aspect of the present invention;
Figure 10 illustrates in schematic form the operation of a typical task dispatcher function from a TTC or TTH scheduler, which has been modified in accordance with an aspect of the present invention;
Figure 11 illustrates in schematic form the operation of software that might be executed on the Monitor Processor illustrated in Figure 8, in accordance with an aspect of the present invention;
Figure 12 illustrates in schematic form the operation of a task dispatcher function from a TTC or TTH scheduler in which the Monitor Processor is sending information back to the Main Processor advising whether the task execution it is about to perform is in accordance with the predetermined task schedule, in accordance with an aspect of the present invention;
Figure 13 illustrates in schematic form a further alternative embodiment of a computer system in which the Monitor Processor does not store a representation of the predetermined task schedule but - instead - calculates this schedule at run time, in accordance with an aspect of the present invention;
Figure 14 illustrates in schematic form the operation of software that might be executed on the Monitor Processor illustrated in Figure 13, in accordance with an aspect of the present invention;
Figure 15 illustrates in schematic form a further alternative embodiment of a computer system in which the Main Process and Monitor Process execute on a single processor and the Monitor Process employs an area of internal memory to store information about the predetermined Task Sequence Representation, in accordance with an aspect of the present invention; and
Figure 16 illustrates in schematic form the operation of software that might be executed on the Monitor Process illustrated in Figure 15, in accordance with an aspect of the present invention.

### Detailed Description of the Invention

We begin by describing some existing techniques that are employed to create computer systems that execute tasks according to a predetermined task schedule. We then go on to describe how the present invention can be used to improve the reliability and security of such computer systems.

Computer systems that execute tasks according to a predetermined task schedule are sometimes referred to as time-triggered (TT) systems. TT systems are typically (but not necessarily) implemented using a design based on a single interrupt linked to the periodic overflow of a timer.

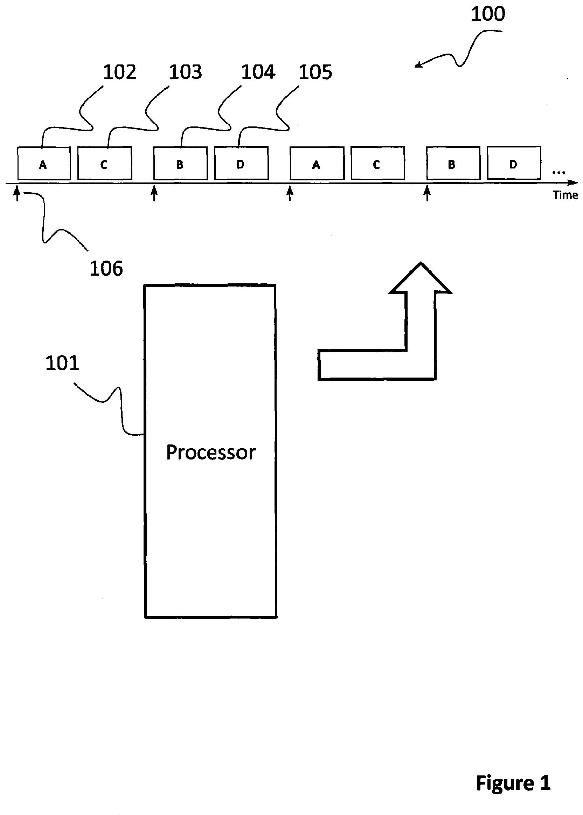

For example, Figure 1 shows a TT computer system 100 made up of a Main Processor 101 that is executing a set of software tasks (in this case Task A 102, Task B 103, Task C 104 and Task D 105) according to a predetermined task schedule. In Figure 1, the release of each sub-group of tasks (for example, Task A 102 and Task B 103) is triggered by what is usually called a "Timer Tick" 106. The Timer Tick 106 is usually implemented by means of a timer interrupt.

In Figure 1, the Timer Ticks are periodic. In an aerospace application, the "Tick Interval" (that is, the time interval between Timer Ticks) of 25 ms might be used, but shorter Tick Intervals (e.g. 1 ms or less) are also used in many systems.

In Figure 1, the task sequence executed by the computer system is as follows: Task A, Task C, Task B, Task D.

In many designs, such a task sequence will be determined at design time (to meet the system requirements) and will be repeated "forever" when the system runs (until an error occurs, or the system is halted or powered down).

Sometimes it is helpful (for example, during the design process) to think of this task sequence as a "Tick List": such a list lays out which task will execute in each system "Tick", and the order in which these executions will occur.

For example, the Tick List corresponding to the task set shown in Figure 1 could be represented as follows:
[Tick 0]
   Task A
   Task C
[Tick 1]
   Task B
   Task D

Once the system reaches the end of the Tick List, it starts again at the beginning.

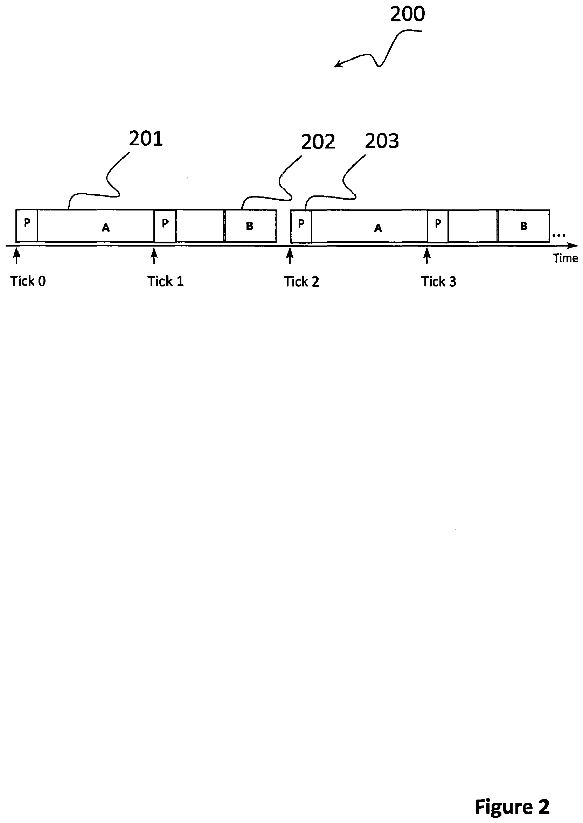

It should be made clear that the Timer Ticks need not be periodic in such systems. For example, Figure 2 shows a schematic representation 200 of a task set (including Task P 201) in which the Timer Ticks 202 have been adapted to match the execution times of the various tasks. Such systems can also be represented by a Tick List: for example, a possible Tick List corresponding to the task set shown in Figure 2 might be as follows:
[Tick 0, t = 0 ms]
   Task P
[Tick 1, t = 3 ms]
   Task Q
[Tick 2, t = 11 ms]
   Task R
[Tick 3, t = 17 ms]
   Task S
[Tick 4, t = 19 ms]
   Task T

In Figure 1 and Figure 2, the tasks are co-operative (or "non-preemptive") in nature: each task must complete before another task can execute. The design shown in these figures can be described as "time triggered co-operative" (TTC) in nature.

Note that implementation of TTC designs need not involve the use of interrupts at all. For example, we could execute the set of tasks shown in Figure 1 (102, 103, 104, 105) as follows:
Task A
Task C
   [Delay]
Task B
Task D
   [Delay]

Again, the above sequence would repeat "forever". This type of solution is sometimes called a "Super Loop". In general, control of the task timing is less precise in Super Loop systems than for those involving interrupts, but - for TTC designs with what is sometimes called "soft" timing constraints - use of a Super Loop may be appropriate.

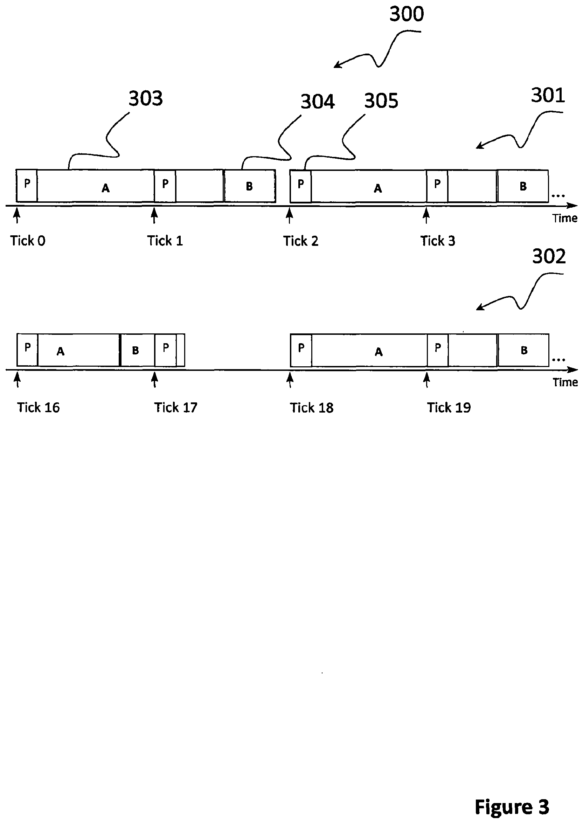

Other popular TT designs involve the use of task pre-emption, where a high-priority task can interrupt (pre-empt) a lower-priority task while it (that is, the lower-priority task) is running. For example, the upper diagram 301 in Figure 3 shows a set of three tasks 301, Task A 303 (a low-priority, co-operative task), Task B 304 (another low-priority, co-operative task), and Task P (a higher-priority pre-empting task). In this example 301 302, the lower-priority tasks may be pre-empted periodically by the higher-priority task 302. More generally, this kind of "time triggered hybrid" (TTH) design may involve multiple co-operative tasks (all with an equal priority) and one or more pre-empting tasks (of higher priority).

Implementation of TTH designs will generally involve the use of interrupts.

The task sequence for the task set shown in the upper diagram 301 in Figure 3 could be listed as follows: Task P, Task A, Task P, Task B, Task P, Task A, Task P, Task B.

For any set of periodic tasks, the cycle of task executions will always repeat, after an interval known as the hyperperiod (or "major cycle"). The length of the hyperperiod can be determined by calculating the "lowest common multiple" (LCM) of the periods of all tasks in the set.

For example, suppose that we have a set of two tasks, with periods of 4 ms and 5 ms.
The multiples of 4 are: 4, 8, 12, 15, 20, 24...
The multiples of 5 are: 5, 10, 15, 20, 25 ...
The lowest common multiple (and the length of the hyperperiod) is 20 ms.

Where a set of periodic tasks is asynchronous, there is a delay (or offset) before one or more tasks runs for the first time. This is the case - for example - in the task set shown 100 in Figure 1. In this case, Task A 102 and Task B 103 run with an offset of 0, but Task C 104 and Task D 105 both run after a delay of 1 Tick. Note that all four tasks have the same period (2 Ticks) in this example.

When a set of asynchronous periodic tasks runs, there may be an initial period during which the task sequence is not the same as the task sequence when the system is in a "steady state". We refer to this initial period as the Task Sequence Initialisation Period.

Reference 4 demonstrates that - if required - the length of this Task Sequence Initialisation Period can be calculated by: (longest task offset) + 2 * (length of hyperperiod).

For example, for the following set of tasks:
Task_A: Period = 5 ms, Offset = 0 ms
Task_B: Period = 10 ms, Offset = 1 ms
Task_C: Period = 25 ms, Offset = 2 ms
Task_D: Period = 25 ms, Offset = 3 ms
Task_E: Period = 50 ms, Offset = 4 ms

The length of the hyperperiod is 50 ms.
The length of the Task Sequence Initialisation Period is 104 ms.

Where a set of periodic tasks is synchronous, all tasks execute for the first time in the first Tick.

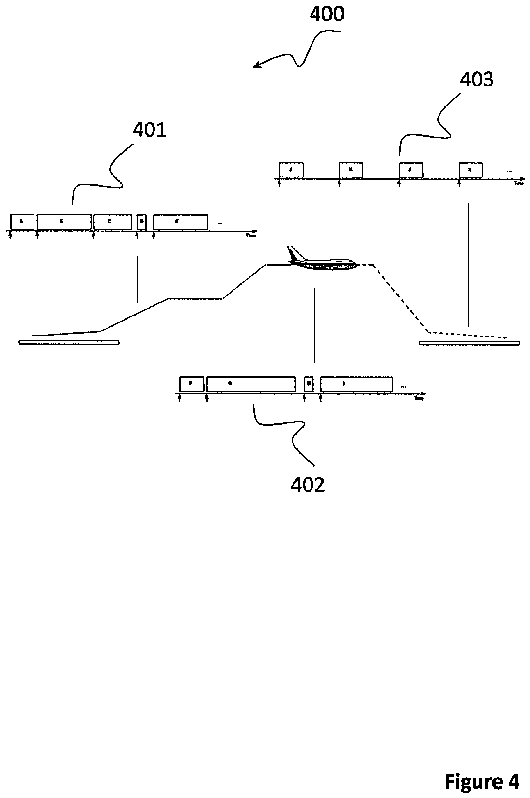

Both TTC and TTH designs (as well as other TT designs) may employ several task schedules, for use in different System Modes. For example, Figure 4 shows a schematic representation of the software architecture 400 for an aircraft system with different System Modes (401, 402, 403) corresponding to the different flight stages (preparing for takeoff, climbing to cruising height, etc).

When developing TT designs with multiple System Modes, we are likely to have a different Tick List for each System Mode.

Note that - during the system design - we may need to consider the Task Sequence Initialisation Period both when the system is initialised, and at any time at which the System Mode changes.

Note also that - for such a TT system design - we can determine at design time precisely what the task sequence will be when the system operates: this means that - if required - we can determine the task sequence even during the Task Sequence Initialisation Period (for asynchronous task sets). One convenient way of doing this is to treat the Task Sequence Initialisation Period as a separate System Mode.

Please note that the timing of the transition between System Modes may not be known in advance (because, for example, the time taken for the plane shown in Figure 4 to reach cruising height will vary with weather conditions), but this does not alter the design or implementation process. The key feature of all TT designs is that the tasks - whether co-operative or pre-empting, whatever the System Mode - are always released according to a schedule that is determined, validated and verified when the system is designed.

It will be appreciated that only one System Mode may be active at any point in time while the computer system is operating: this is referred to as the active System Mode. When in the active System Mode, the computer system will execute tasks in accordance with the active task schedule. In a computer system, the various task schedules for the various System Modes may be recorded in various Task Sequence Representations: the Task Sequence Representation corresponding to the active System Mode is referred to as the active Task Sequence Representation (or active TSR).

We now consider how TT designs are typically implemented in current systems. Further information about this topic can be found in Reference 5 and Reference 6.

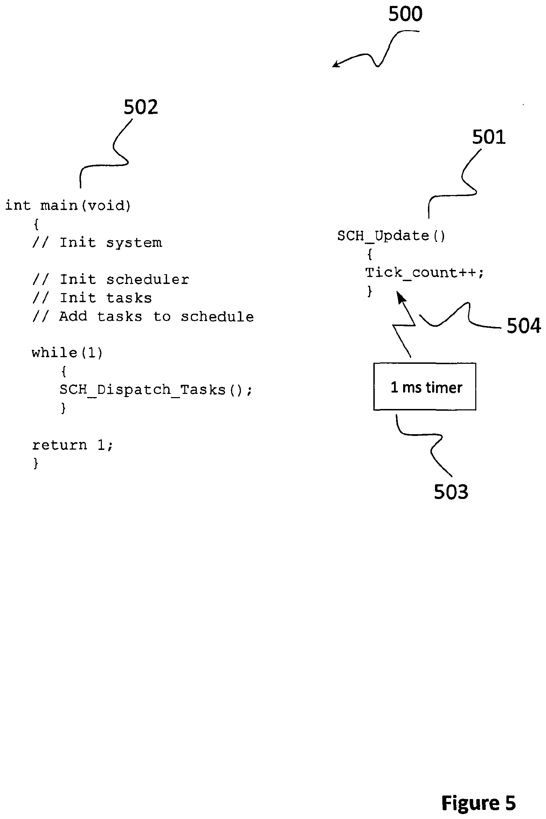

Figure 5 shows a schematic representation 500 of the key components in a TTC scheduler. First, there is function SCH_Update() 502: this is linked, in this example, to a timer 503 that is assumed to generate periodic ticks - that is, timer interrupts 504 - every millisecond. The SCH_Update() 502 function is responsible for keeping track of elapsed time. Within the function main() 501 we assume that there are functions to initialise the scheduler, initialise the tasks and then add the tasks to the schedule.

For example, the following code illustrates an example of how three periodic tasks may be configured on a Main Processor using a stancard TTC scheduler:

```
 int main(void)
    {
    SCH_TTC_Init(); // Set up the scheduler
    // Other init functions
    // ...
    // Add Task_A, Task_B and Task_C to the schedule
    // Parameters: Task name, task offset, task period
    SCH_TTC_Add_Task(Task_A, 0, 10);
    SCH_TTC_Add_Task(Task_B, 0, 15);
    SCH_TTC_Add_Task(Task_C, 0, 33);
    SCH_TTC_Start(); // Start the schedule
    while(1)
         {
        SCH_TTC_Dispatch_Tasks();
        }
    return 1;
    }
```

Please note that the code listing above shows a synchronous task set.

The following code listing shows an asynchronous task set:

```
 int main(void)
    {
    SCH_TTC_Init(); // Set up the scheduler
    // Other init functions
    // ...
    // Add Task_A, Task_B and Task_C to the schedule
    // Parameters: Task name, task offset, task period
    SCH_TTC_Add_Task(Task_A, 0, 10);
    SCH_TTC_Add_Task(Task_B, 3, 15);
    SCH_TTC_Add_Task(Task_C, 10, 33);
    SCH_TTC_Start(); // Start the schedule
    while(1)
        {
        SCH_TTC_Dispatch_Tasks();
        }
    return 1;
    }
```

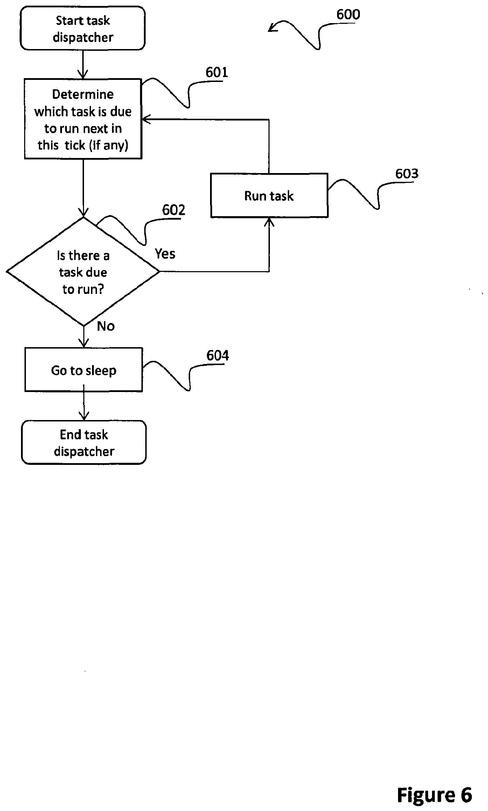

In both of the code listings presented above (and in Figure 5, function main() 501), the process of releasing the system tasks is carried out in the function SCH_Dispatch_Tasks(). The operation of a typical SCH_Dispatch() function is illustrated schematically in Figure 6.

Figure 6 shows an overview 600 of a task dispatcher function that might be incorporated in a TTC or TTH scheduler. In Figure 6, the dispatcher begins by determining 601 602 whether there is any task that is currently due to run. If the answer to this question is "yes", the dispatcher runs the task 603. It repeats this process (check 601, 602, run 603) until there are no tasks remaining that are due to run. The dispatcher then puts the processor to sleep 604: that is, it places the processor into a power-saving mode. The processor will remain in this power-saving mode until awakened by the next timer interrupt: at this point the timer ISR 502 (Figure 5) will be called again, followed by the next call to the dispatcher function 600 (Figure 6).

Referring again to Figure 5, it should be noted that there is a deliberate split between the process of timer updates 502 and the process of task dispatching (in main() 501, and described in more detail in Figure 6). This split means that it is possible for the scheduler to execute tasks that are longer than one tick interval without missing timer ticks. This gives greater flexibility in the system design, by allowing use of a short tick interval (which can make the system more responsive) and longer tasks (which can - for example - simplify the design process). Although this flexibility is available, many (but not all) TTC systems are designed to ensure that no tasks are running when a timer interrupt occurs: however, even in such designs, a run-time error may mean that a task takes longer to complete. Because of the dynamic nature of the scheduler, the system may be able to recover from such run-time errors, provided that the error is not permanent.

Flexibility in the design process and the ability to recover from errors are two reasons why "dynamic" TT designs (with a separate timer ISR and task dispatch functions) are generally preferred over simpler designs in which tasks are dispatched from the timer ISR. In addition, separating the ISR and task dispatch functions also makes it very simple to create TT designs with support for task pre-emption (sometimes called "time-triggered hybrid" - TTH - designs).

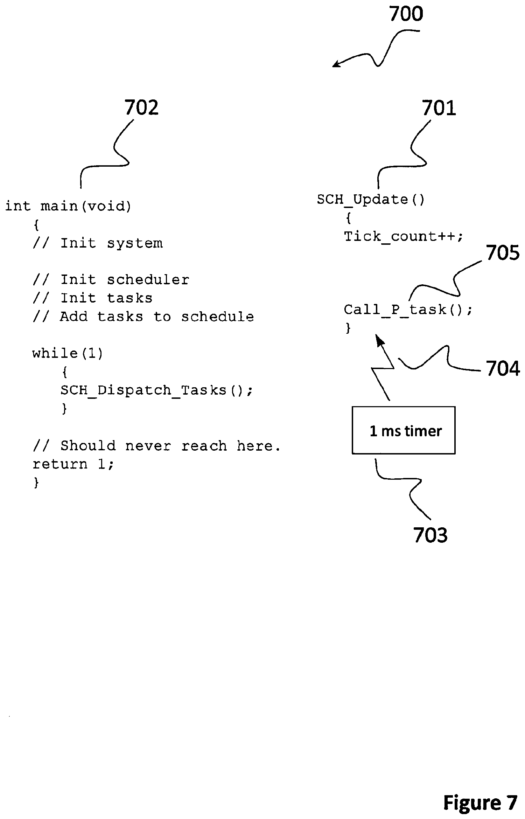

As an example of a TTH scheduler design, please see Figure 7. This figure shows a schematic view 700 of a typical TTH scheduler implementation. As with the TTC design (in Figure 5), the TTH design incorporates a SCH_Update() function 702, and a main() function 701 with a task dispatcher. The TTH design also links a timer 703 which generates periodic interrupts 704 to the SCH_Update function 702. The only difference between the TTC implementation in Figure 5 and the TTH implementation in Figure 6 is that the TTH implementation includes a call to a pre-empting task (function) 705 within the timer ISR.

Please see Reference 5 and Reference 6 for further information about the implementation of different forms of TT scheduler.

We now consider how tasks are implemented in a typical TT design.

Reference 5 and Reference 6 provide non-limiting examples of the kinds of tasks that may be executed in TT systems, for example "RS-232 data transmission", "display updates" and "PID control" tasks, including full implementation details. Other examples of tasks may involve reading input data, performing calculations ard generating outputs.

Using a TT architecture allows a developer to ensure that some or all of the tasks in the system begin executing at precisely-determined points in time. However - in some real-time systems - care must still be taken when designing and implementing the tasks in order to ensure that all of the system timing requirements are met.

To understand why this is necessary, please consider the following example of a task which may be run on the Main Processor:

```
 void Task_A(void)
     {
    /* Task_A has a known WCET of A milliseconds */
    // Read inputs
    // Perform calculations
    /* Starting at t <= A ms */
    // Generate outputs
    /* Task_A completes within A milliseconds */
    }
```

In this case, the worst-case execution time (WCET) of the task is known. Knowledge of WCET is a standard requirement for tasks in real-time embedded systems. In this case we know (only) that the task will generate certain outputs within A ms from the start of the task (where A is the known WCET of the task).

The listing below shows an alternative implementation of the task:

```
 void Task_A(void)
    {
    /* Task_A has a known WCET of A milliseconds */
    /* Task_A is balanced */
    // Read inputs (KNOWN AND FIXED DURATION)
    // Perform calculations (KNOWN AND FIXED DURATION)
    /* Starting at t = A1 ms
         (measured from the start of the task),
        for a period of A2 ms, generate outputs */
    /* Task_A completes after (A1+A2) milliseconds */
    }
```

In this alternative implementation, the code in the task has been balanced. Slightly more formally this means that we know both the "worst case" (WCET) and "best case" (BCET) execution times of this task, and that BCET = WCET.

Where the code is balanced, it is possible to determine more precisely when particular task activities will be performed (at a time or times measured relative to the start of the task). In the example shown above, the task outputs will be generated in an interval starting A1 ms after the start of the task and finishing A2 ms later.

It may therefore be desirable to balance the task code. Balancing techniques include single-path programming (see Reference 7, Reference 8, Reference 9 and Reference 10) and Sandwich Delays (Reference 11).

We now describe how the present invention can be implemented in order to improve the reliability and security of computer systems that have been configured to run tasks according to a predetermined task schedule.

Figure 8 shows a computer system 800 comprising a Monitor Processor 802 which acts to determine where a Main Processor 801 is about to execute a task which is not in accordance with the active task schedule. To facilitate this: [i] the Main Processor 801 provides information about the next task that it intends to execute to the Monitor Processor 802 via a Communication Link 803; and [ii] the Monitor Processor 802 has access to the active Task Sequence Representation 804 812 813 (that is, a computer-readable record of the active task schedule): this active Task Sequence Representation 804 812 813 may be stored in some form of internal memory 804 and / or in some form of external data-storage device 812 813.

In Figure 8, the Main Processor and the Monitor Processor may each comprise one or more "soft" or "hard" processor cores (that execute some software) and / or one or more hardware cores (that do not execute any software). The Main Processor 801 and the Monitor Processor 802 may both be implemented on a single processor chip, such as a commercial-off-the-shelf (COTS) microcontroller or microprocessor, Digital Signal Processor (DSP), Field-Programmable Gate Array (FPGA), Application Specific Integrated Circuit (ASIC) or similar device.

For example, the computer system may be implemented using a dual-core processor, with the Main Processor operating on one core and the Monitor Processor operating on the second core. As an alternative example, the computer system may be implemented on an FPGA platform, with the Main Processor implemented by means of a "soft" or "hard" processor core (and some software) and the Monitor Processor implemented using FPGA logic (without any software).

Preferably, however, the Main Processor and the Monitor Processor will be implemented on separate processor chips, thereby reducing the opportunities for common-mode failures in the error-detection process.

Also preferably, the Main Processor 801 and the Monitor Processor 802 will be physically separated (for example, the Main Processor 801 may be implemented on a processor chip that is located in the engine compartment in a passenger vehicle and the Monitor Processor 802 may be implemented on a processor chip that is located between seats in the passenger area), thereby (further) reducing the opportunities for common-mode failures in the error-detection process.

It will be appreciated that - whatever design and implementation options are selected for the Main Processor 801 and Monitor Processor 802 in a particular system - ensuring that the Main

Processor 801 and the Monitor Processor 802 employ different hardware and / or software designs, may also reduce the opportunities for common-mode failures in the error-detection process.

Figure 8 also shows the Control Mechanism (805, 806, 807) by means of which the Monitor Processor 802 can halt or reset the Main Processor 801 and take other corrective actions, if the Monitor Processor 802 determines that the Main Processor 801 is about to execute a task that is not in accordance with the active task schedule: we say more about the Control Mechanism shortly.

Preferably, the Main Processor 801 comprises a time-triggered scheduler.

This time-triggered scheduler may (as a non-limiting example) be driven by a periodic source of interrupts. Alternatively (as another non-limiting example), this time-triggered scheduler may be driven by an aperiodic source of interrupts.

Optionally, the Main Processor 801 comprises a time triggered cooperative (TTC) scheduler or a time triggered hybrid (TTH) scheduler, similar to the designs described in detail in Reference 5.

Optionally, one or more of the tasks executing on the Main Processor 801 has been "balanced" to ensure that the task execution time is approximately the same every time the task is executed.

Preferably, the Monitor Processor 802 has access to at least one predetermined Task Sequence Representation 804 812 813 stored - for example - in internal memory 804 or an external data-storage device 812 813, this representation having been determined and stored before the computer system begins to operate.

As a non-limiting example, different types of internal memory 804 may be used to store the Task Sequence Representation 804 812 813: for example, RAM, ROM, Flash or EEPROM memory. Other ways of implementing such an internal memory device can also be employed (for example, using a collection of suitable gates in an FPGA device).

As an example of the implementation of a Task Sequence Representation 804 812 813, please refer to Figure 1. For the task set shown in Figure 1 (102, 103, 104, 105), a possible Task Sequence Representation 804 812 813 would be as follows:

```
 // Task Sequence Representation
 #define LENGTH_OF_TSR_G 4
 static unsigned char TSR_G[LENGTH_OF_TSR_G] =
    {
    0,
    2,
    1,
    3
    } ;
```

In the above example, the array stores a representation of the tasks shown in Figure 1, where Task A 102 is represented with task ID 0, Task B 103 is represented with task ID 1, and so on.

Optionally, the Monitor Processor 802 creates and stores one or more Task Sequence Representations 804 812 813 in - for example - an internal 804 or external memory device 812, 813, these representations being determined by observing the operation of the Main Processor 801 at points during the system operation. Optionally, the collection of task sequence information will be carried out when the computer system enters a particular System Mode for the first time.

Alternatively, the Monitor Processor 802 will create one or more Task Sequence Representations 804 812 813 during the system operation by running a scheduling algorithm on the Monitor Processor 802 that is similar to the scheduling algorithm that is running on the Main Processor 801.

There will often be a Task Sequence Representation 804 812 813 that corresponds to each different System Mode in the Main Processor 801.

Each Task Sequence Representation 804 812 813 may be stored in one or more data-storage devices 804 812 813.

Optionally, there will be two or more copies of one or more Task Sequence Representations 804 812 813, these copies being held in one or more data-storage devices 804 812 813. Optionally, the different copies of the Task Sequence Representation 804 812 813 will be compared at points during the system operation and - if found to be different - this event may be treated as a Data Error. Optionally, such a Data Error will be handled in the same way that a Task Sequence Error is handled.

Optionally, there will be three or more copies of one or more Task Sequence Representations 804 812 813: these copies may be held in one or more data-storage devices 804 812 813. Optionally, the different copies of the Task Sequence Representation 804 812 813 will be compared at points during the system operation and - if found to be different - a decision about the correct sequence may be based on a majority decision; where a majority decision is not possible, this event may be treated as a Data Error. Optionally, such a Data Error will be handled in the same way that a Task Sequence Error is handled.

It will be appreciated that - whatever design and implementation options are selected for the Main Processor 801 and Monitor Processor 802 in a particular system - ensuring that the Main Processor 801 and the Monitor Processor 802 employ different approaches to determine which task should be executed next by the Main Processor 801 may reduce the opportunities for common-mode failures in the error-detection process. For example, one effective combination may be to use [i] a Main Processor 801 that comprises a (dynamic) TTC or TTH scheduler, by means of which it will determine which task to execute next based on calculations made at run time, and combine this with [ii] a Monitor Processor 802 that comprises a set of static Task Sequence Representations (where the Task Sequence Representations were determined at design time, before the system began executing).

The Communication Link 803 between the Main Processor 801 and the Monitor Processor 802 may be implemented using a wired serial connection, based on a standard protocol (for example, SPI, I2C, RS-232, RS-422, RS-485, CAN, etc) or a custom protocol. Alternatively, the Communication Link 803 between the Main Processor 801 and the Monitor Processor 802 may be implemented using a wired parallel interface (with, for example, one or more processor I/O pins used to represent the current state of the Main Processor). Alternatively, the Communication Link 803 between the Main Processor 801 and the Monitor Processor 802 may be implemented using an area of memory to which both processors have access. Alternatively, the Communication Link 803 between the Main Processor 801 and the Monitor Processor 802 may be implemented using a wireless protocol.

Optionally, the Monitor Processor will, by means of the Control Mechanism, cause the Main Processor to halt or reset, in situations where the Monitor Processor determines that the Main Processor is about to run a task that is not in accordance with the active task schedule.

Optionally, the process of halting the Main Processor in situations where the Monitor Processor determines that the Main Processor is about to run a task that is not in accordance with the active task schedule will further comprise an attempt to place the Main Processor into a safe state prior to halting the Main Processor. Such a safe state may be one in which - for example - the output pins of the Main Processor are set to levels that ensure that the any external equipment that is under the control of the computer system is shut down.

The Control Mechanism may comprise a System Control output 805 and / or a Reset Link 807, and / or a Communication Link B 806.

Optionally - as part of the Control Mechanism - the computer system will have a System Control output 805 that allows the system to control one or more external devices or systems and / or the computer system itself.

Optionally, the System Control output 805 will comprise one or more output pins on the Monitor Processor, and such pins may be further connected to one or more electromechanical relays or other actuators or similar devices.

Optionally, the System Control output 805 will allow the computer system to disconnect the Main Processor 801 from a power source, thereby halting the Main Processor 801 (and rendering it inoperative). Optionally, the System Control output 805 will allow the computer system to disconnect the Main Processor 801 from a power source temporarily, thereby "cycling the power" on the Main Processor 801 and causing it to reset. Optionally, the System Control output 805 will be used to disconnect the computer system from its own power source. Optionally, the System Control output 805 will be used to disconnect the computer system from other systems. Optionally, the System Control output 805 will be used to connect the computer system to other systems. Optionally, the System Control output 805 will be used to shut down devices that are under the control of the computer system. Optionally, the System Control output 805 will allow the computer system to disconnect one or more external devices from a power source, thereby rendering such devices inoperative. Optionally, the System Control output 805 will be used to enable devices that are under the control of the computer system. Optionally, the System Control output 805 will be used to enable safety systems on devices that are under the control of the computer system.

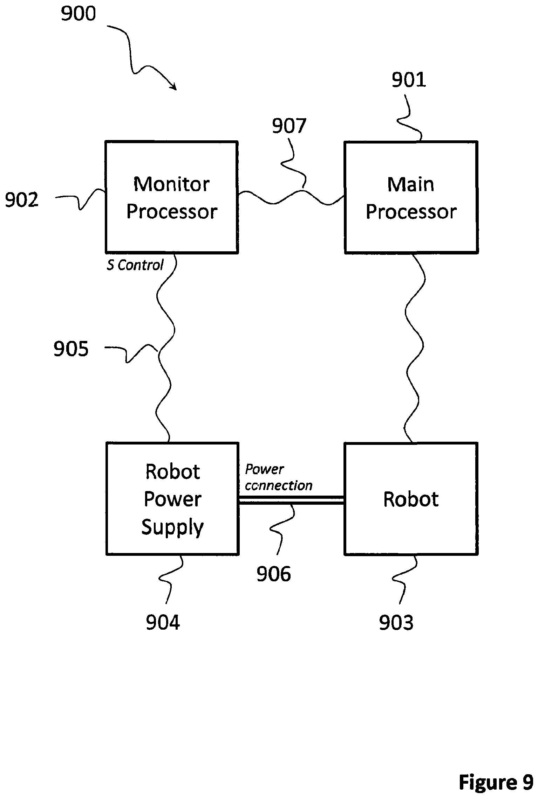

As a non-limiting example, Figure 9 illustrates the use of the System Control Output 905 in a design 900 in which the Main Processor 901 is being used to control an industrial robot 903. The computer system comprises a Main Processor 901 linked to a physically-separated Monitor Processor 902 by means of a Communication Link 907 that is implemented (in this example) by means of standard RS-422 protocol. In this design 900, the System Control Output 905 is used to shut down the power supply 904 to the robot 903 in the event that a Task Sequence Error is detected on the Main Processor 901. In this way, the robot 903 is prevented from operating dangerously in the event of a fault in the Main Processor 901.

Optionally - as part of the Control Mechanism - there will be a Reset Link 807 between the Monitor Processor 802 and the Main Processor 801. Optionally, this Reset Link 807 will be implemented as a connection between an outout pin on the Monitor Processor 802 and a reset pin on the Main Processor. Alternatively, this Reset Link 807 may be implemented as a connection between an output pin on the Monitor Processor 802 and an interrupt-related pin on the Main Processor. Alternatively, this Reset Link 807 may be implemented as a connection between an output pin on the Monitor Processor 802 and an input pin on the Main Processor. Alternatively, the Reset Link 807 may be any means of triggering a reset on the Main Processor.

Optionally - as part of the Control Mechanism - there will be a Communication Link B 806 between the Monitor Processor 802 and the Main Processor. Optionally, the Communication Link B 806 between the Monitor Processor 802 and the Main Processor 801 may be implemented using a wired serial protocol. Alternatively, the Communication Link B 806 between the Monitor Processor 802 and the Main Processor 801 may be implemented using a wired parallel protocol. Alternatively, the Communication Link B 806 between the Monitor Processor 802 and the Main Processor 801 may be implemented using an area of memory to which both processors have access. Alternatively, the Communication Link B 806 between the Monitor Processor 802 and the Main Processor 801 may be implemented wirelessly.

Optionally, by means of the Control Mechanism, the Monitor Processor 802 may reset the Main Processor 801, if it determines that the Main Processor 801 is about to execute a task that is not in accordance with the active task schedule.

Optionally, by means of the Control Mechanism, the Monitor Processor 802 may halt or reset the Main Processor, if it determines that the Main Processor 801 is about to execute a task that is not in accordance with the active task schedule.

Optionally, by means of the Control Mechanism, the Monitor Processor 802 will pass a message to the Main Processor 801 requesting that the Main Processor 801 reset itself or halt itself, if it determines that the Main Processor 801 is about to execute a task that is not in accordance with the active task schedule. It will be appreciated that such a request is intended to give the Main Processor 801 the opportunity to perform an "orderly shutdown", if this is possible. It will also be appreciated that - if the Main Processor 801 is about to execute a task that is not in accordance with the active task schedule - then this may be symptomatic of significant problems or faults in the Main Processor. If - therefore - the Main Processor 801 does not comply with the above reset of halt request within a predetermined period, then - optionally, by means of the Control Mechanism - the Monitor Processor 802 will - for example - cycle the power to the Main Processor 801 (causing it to reset itself) or remove the power from the Main Processor 801 altogether (causing it to halt).

Optionally, by means of the Control Mechanism, the Monitor Processor 802 may reset or halt the Monitor Processor 802 if it receives no reports of activity about one or more tasks from the Main Processor 801 for a predetermined period.

Optionally, by means of the Control Mechanism, the Monitor Processor 802 may reset or halt the Main Processor 801 if it receives no reports of any task activity from the Main Processor 801 for a predetermined period.

Optionally, the Monitor Processor 802 may ignore reports of task activity from the Main Processor 801 at particular times during the system operation.

Optionally, the Monitor Processor 802 is configured to permit continued operation of the Main Processor 801 provided the number of detected errors is below a predetermined threshold.

Optionally, the Monitor Processor 802 is configured to permit continued operation of the Main Processor 801 provided the rate of detected errors is below a predetermined threshold.

Optionally, the Main Processor 801 may not send information about the next task to be executed for every task in the predetermined task schedule.

Optionally, the Monitor Processor 802 will signal an alarm if it determines that the Main Processor 801 is about to execute a task that is not in accordance with the active task schedule. Optionally, various forms of audible and / or visual signalling devices can be employed as an Error Signal device 808, such as a small buzzer or an LED or LCD device, or a form of wired or wireless connection to some form of manned or unmanned monitoring station.

Optionally, the Monitor Processor 802 will log an error if it determines that the Main Processor 801 is about to execute a task that is not in accordance with the active task schedule.

Optionally, different types of internal memory 804 may be used to implement an Error Log 809: for example, RAM, Flash or EEPROM memory. Other ways of implementing such an Error Log might also be employed (for example, using a collection of suitable gates in an FPGA device).

Optionally, different types of external memory 809 may be used to implement an Error Log 809: for example, RAM, Flash or EEPROM memory. Other ways of implementing such an Error Log might also be employed (for example, using a collection of suitable gates in an FPGA device, or a "hard disk").

Optionally, the computer system may have a System Reset input 810, the use of which causes the Main Processor 801 to begin its operations from a known initial state. The System Reset input 810 may take the form of a switch or similar device that is located on or close to the computer system. Alternatively, the System Reset input 810 may be implemented through a wired or wireless interface that allows the system to be reset at a distance.

Optionally, the computer system may have a System Halt input 811, the use of which causes the system to stop operating. Optionally, the system will halt in a safe state. The System Halt input 811 may take the form of a switch or similar device that is located on or close to the computer system. Alternatively, the System Halt input 811 may be implemented through a wired or wireless interface that allows the system to be reset at a distance.

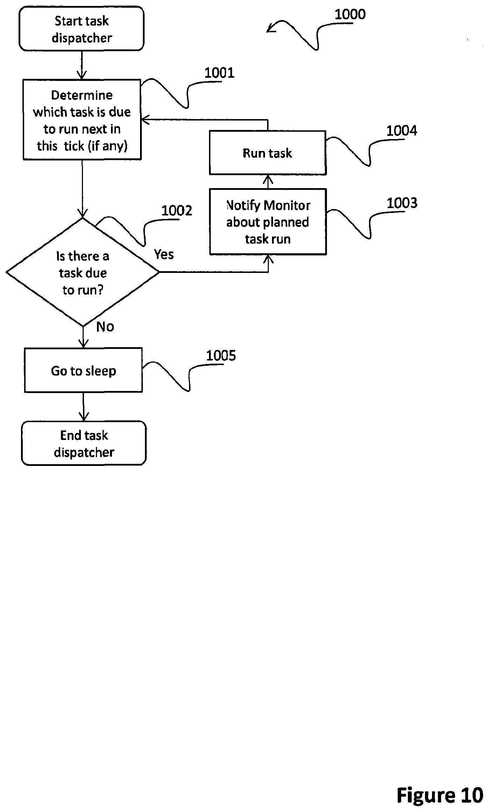

Figure 10 shows a schematic representation of a task dispatcher function that could be employed on the Main Processor 801 shown in Figure 8. This task dispatcher should be compared with the standard version shown in Figure 6: to be clear: Figure 6 does not have the benefit of the present invention.

The task dispatcher 1000 shown in Figure 10 begins by determining 1001 whether there is any task that is currently due to run. If the answer to this question is "yes" 1002, the dispatcher notifies the monitor system about the task it is about to run 1003 before it runs the task 1004. It repeats this process (check 1001, 1002, notify 1003, run 1004) until there are no tasks remaining that are due to run. The dispatcher then places the processor into a power-saving mode 1005.

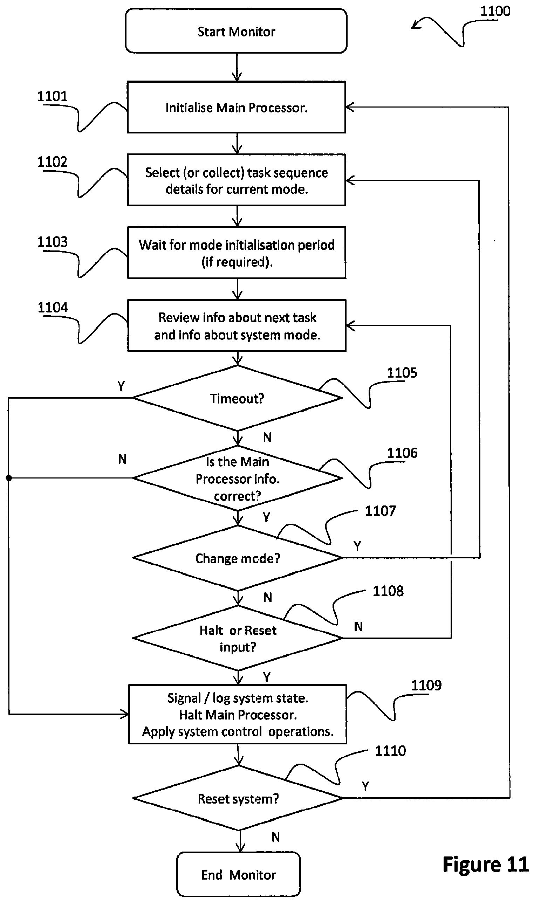

One possible implementation of the other half of the monitoring process introduced in the present invention is shown in Figure 11.

The monitoring process starts by initialising the Main Processor 1101.

Optionally, the initialisation of the Main Processor 801 will be carried out by means of the Control Mechanism. For example, the Monitor Processor 802 may reset the Main Processor 801 by means of the Reset Link 807. Resetting the Main Processor 801 in this way may - for example - involve holding a reset pin on the Main Processor 801 in low state for a brief period (typically few milliseconds) and then releasing this pin, assuming that the reset pin is "active low". Alternatively, the Monitor Processor 802 may - for example - cycle the power to the Main Processor 801 (causing it to reset itself), by means of the System Control output 805. Alternatively, the Monitor Processor 802 may - by means of Communication Link B 806 - send a message to the Main Processor 801 requesting that the Main Processor 801 resets itself.

The Monitor Processor may employ Communication Link B to provide information to the Main Processor when the Main Processor is being configured after a reset. Such a link may be used to provide information to the Main Processor 801 about the required system state at the time of initialisation. Such information might be provided if the system has been reset because an error has been detected. Information provided may comprise the System Mode (at the time when the error was detected). Optionally, information provided may also comprise the system tick value (at the time when the error was detected). Through use of this information, the Monitor Processor 802 can help to restore the Main Processor 801 to a state very similar to the state before the error occurred. Alternatively, the Monitor Processor 802 may be pre-configured to provide different initialisation information in the event of a specific error, to ensure that the Main Processor operates safely in these circumstances.

Where the Monitor Processor 802 provides information to the Main Processor 801 about the required system state at the time of initialisation, this information may comprise messages delivered via Communication Link B 806: the system initialisation process may then comprise the system initialisation operation carried out at the start of the function main() 501 701.

Optionally, the Monitor Processor 802 may trigger an initialisation process and then wait for a fixed period before proceeding.

Optionally, the Main Processor 801 may send a message (over the Communication Link 803) to indicate that it has completed any initialisation.

In the next process in Figure 11 (1102), the Monitor Processor 802 then selects or collects the active Task Sequence Representation.

As noted previously, the Task Sequence Representation that is used by the Monitor Processor 802 will preferably have been determined (and stored) before the computer system begins to operate. Process 1102 will then involve selecting this representation.

Alternatively, the Task Sequence Representation that is used by the Monitor Process 802 may - for example - be collected at run time by recording the task sequence provided by the Main Processor 801 at one or more points when the system is operational. Optionally, the collection of task sequence information (and the creation of the active Task Sequence Representation) will be carried out when the computer system enters a particular System Mode for the first time.

Optionally, the Task Sequence Representation (whether it is stored before the computer system begins to operate, or generated when the computer system is operational) will be stored in an internal 804 or external 812 813 data-storage device.

As noted previously, there may be several different Task Sequence Representations corresponding to several different System Moces. Optionally, these different Task Sequence Representations may be stored in different data-storage devices. Optionally, the Monitor Processor 802 will select the active Task Sequence Representation (corresponding to the active System Mode) 1102. We say more about the possible representation of the different System Modes below.

Optionally, the Monitor Processor 802 will then wait 1103 for the Main Processor 801 to complete a Task Sequence Initialisation Period corresponding to the active System Mode.

Optionally, the Monitor Processor 802 will ignore outputs from the Main Processor 801 during the Task Sequence Initialisation Period corresponding to the active System Mode.

Once the Main Processor 801 has initialised 1101, the Task Sequence Representation has been selected 1102 (and, optionally, collected 1102) and the System Mode initialisation is complete 1103, the Monitor Processor 802 begins the monitoring process 1104.

The monitoring process 1104 involves waiting for the Main Processor 801 to provide information about the next task that it intends to execute, and the Monitor Processor 802 checking that the task information provided by the Main Processor 801 matches the next entry in the active Task Sequence Representation that was selected previously 1102.

A possible implementation of the function for checking the task sequence is shown below. Please note that the code should be read in conjunction with the code for the TSR_G [] array presented previously.

```
 int SCH_Check_Task_Seq(const unsigned char TASK_ID)
    {
    static int Tick_list_index = 0;
    int Return_value = 0;
    if (TSR_G[Tick_list_index] != TASK_ID)
         {
        // Task sequence is WRONG
        Return_value = 1;
         }
    // Task sequence is CORRECT
    Return_value = 0;
    // Increment position in array
    if (++Tick_list_index == LENGTH_OF_TSR_G)
         {
        Tick_list_index = 0;
         }
    return Return_value;
    }
```

During the monitoring process 1104, a Task Sequence Error will be identified 1106 if the proposed task execution (provided by the Main Processor 801) does not match the next entry in the active Task Sequence Representation 804 812 813.

Optionally during the monitoring process 1104, the timing of the arrival of the task sequence information from the Main Processor 801 may be checked 1105 and - if found to be inconsistent with predetermined time limits - a Task-Sequence Timing Error may be identified. Further optionally, a Task-Sequence Timing Error may be identified if the Monitor Processor 802 receives no reports of activity about one or more tasks from the Main Processor 801 for a predetermined period. Further optionally, a Task-Sequence Timing Error may be identified if the Monitor Processor 802 receives no reports of any task activity from the Main Processor 801 for a predetermined period.

In addition to handling any Task-Sequence Timing Errors 1105 and / or Task Sequence Errors 1106, the Monitor Processor 802 will also handle any requests to change mode 1107 from the Main Processor 801.

The non-limiting code example below illustrates how two different task sequences (representing two different System Modes) might be represented.

```
 // Task sequence representation 1
 #define SYSTEM_MODE_ID1 200
 #define LENGTH_OF_TSR1_G 4
 static unsigned char TSR1_G[LENGTH_OF_TSR1_G] =
    {
    0,
    2,
    1,
    3
    };
 // Task sequence representation 2
 #define SYSTEM_MODE_ID2 201
 #define LENGTH_OF_TSR2_G 5
 static unsigned char TSR2_G[LENGTH_OF_TSR2_G] =
    {
    0,
    2,
    4,
    1,
    3
    };
```

In the above example - as in previous examples - the arrays storing the Task Sequence Representations contain task IDs, with task ID values ranging from 0 to 5 in this case. Here, the two different task arrays (TSR2_G[] and TSR2_G[]) represent the different task sequences for two possible System Modes: these modes themselves have System Mode IDs (represented as SYSTEM_MODE_ID1 with a value of 200, and SYSTEM_MODE_ID2 with a value of 201 in this example).

We further assume (for the purposes of this non-limiting example only) that the system can operate with up to 200 possible system tasks, with task IDs ranging in value from 0 to 199. In this case, the Main Processor 801 could report the following information to the Monitor Processor 802 via the Communication Link 803:

```
 200
 0
 2
 1
 3
 0
 2
 1
 3
 201
 0
 2
 4
 1
 3
```

In the above example, the values 200 are not valid task IDs, but they are valid System Mode IDs. This reflects the fact that at the start of the above sequence, the Main Processor 801 is executing tasks from the Task Sequence Representation with ID 200. After some time has passed, the Main Processor 801 indicates that the System Mode has now changed (for example, as a result of inputs from a user, or changes in the operating environment) and that it has begun to execute tasks from the Task Sequence Representation with ID 201.

Optionally during the monitoring process 1104, the timing of any changes to the System Mode may be checked and - if found to be inconsistent with predetermined values - a System-Mode Timing Error may be identified. Optionally, a System-Mode Timing Error will be identified if - for example - the System Mode changes more quickly or more slowly than predetermined limits would suggest is likely. Further optionally, a System-Mode Timing Error will be identified if the Monitor Processor receives no reports of System Mode changes from the Main Processor 801 for longer than a predetermined period.

Optionally during the monitoring process 1104, the sequence of any changes to the System Mode will be checked and - if found to be inconsistent with predetermined values - a System-Mode Sequence Error may be identified.

Optionally, in the event that a Task-Sequence Timing Error is identified 1105, or a System-Mode Timing Error is identified 1105, or a Task Sequence Error is identified 1106, or a System-Mode Sequence Error is identified 1106, the Monitor Processor 802 will signal 1109 the system state (e.g. via an Error Signal device 808) and / or log the system state (for example in an Error Log 809), and / or apply one or more system control operations by means of the System Control output 805.

Optionally, in the event that a Task-Sequence Timing Error is identified 1105, or a System-Mode Timing Error is identified 1105, or a Task Sequence Error is identified 1106, or a System-Mode Sequence Error is identified 1106, the Monitor Processor 802 will ignore this error, if the number of occurrences of the particular error is below a predetermined threshold.

Optionally, in the event that a Task-Sequence Timing Error is identified 1105, or a System-Mode Timing Error is identified 1105, or a Task Sequence Error is identified 1106, or a System-Mode Sequence Error is identified 1106, the Monitor Processor 802 will ignore this error, if the rate of occurrences of the particular error is below a predetermined threshold.

Optionally, the Monitor Processor 802 will also handle any requests to halt the computer system 1108. Such requests to halt the computer system may arise via the System Halt input 811. If a System Halt request is received, the Monitor Processor 802 may 1109 signal the system state (e.g. via an Error Signal device 808) and / or log the system state (for example in an Error Log 809), and / or apply one or more system control operations by means of the System Control output 805.

The algorithm 1100 illustrated in Figure 11 processes any inputs from the System Reset input 810 or the System Halt input 811 in the processes 1108, 1109 and 1110. In the case of either a System Reset input 810 or a System Halt input 811, the Monitor Processor 802 may signal 1109 the system state (e.g. via an Error Signal device 808) and / or log the system state (for example in an Error Log 809), and / or apply one or more system control operations by means of the System Control output 805. In the case of a System Halt input 811, the Monitor Processor 802 may 1109 halt the Main Processor 801, by means (for example) of the Reset Link 807. Halting the Main Processor 801 in this way may - for example - involve holding a reset pin on the Main Processor in a low state (and latching it in this state), assuming that the reset pin is "active low".

In the case of a System Reset input 810, the Monitor Processor 802 may 1110 reset the Main Processor 801 by means of the Reset Link 807. Resetting the Main Processor 801 in this way may - for example - involve holding a reset pin on the Main Processor 801 in low state for a brief period (typically few milliseconds) and then releasing this pin, assuming that the reset pin is "active low". Alternatively, the Monitor Processor 802 may - for example - cycle the power to the Main Processor 801 (causing it to reset itself), by means of the System Control output 805. Alternatively, the Monitor Processor 802 may send a message to the Main Processor 801 requesting that the Main Processor 801 resets itself, by means of Communication Link B 806.

The Monitor Processor 802 will cease it operations after completing the processes laid out in 1110.

Please note that - as explained previously - designers of TT systems often choose to balance the task code, to ensure that the system timing behaviour is temporally deterministic. Optionally, the use of balanced code may be employed in applications of the present invention.

The following non-limiting example illustrates why the use of code balancing may be of benefit when a TTH scheduler (or any other scheduler involving task pre-emption) is employed.

Please refer back to Figure 3. Figure 3 first shows 301 a set of two co-operative tasks where Task A 303 and / or Task B 304 may be pre-empted periodically by the high-priority Task P 305.

The complete task sequence for the upper diagram 301 in Figure 3 could be listed as follows: Task P, Task A, Task P, Task B, Task P, Task A, Task P, Task B.

If the code for all of these tasks is balanced, then this sequence will always be the same (every time this sequence of tasks runs).

If the code is not balanced, then we may - for example - obtain the task sequence shown in the lower half of Figure 3 302 during the system execution. In this case 302, the task sequence would be as follows: Task P, Task A, Task B, Task P, Task P, Task A, Task P, Task B. Without code balancing, this lower diagram 302 may be interpreted as a Task Sequence Error (which may not be what was intended).

There are further system halt and reset options available to the developer.

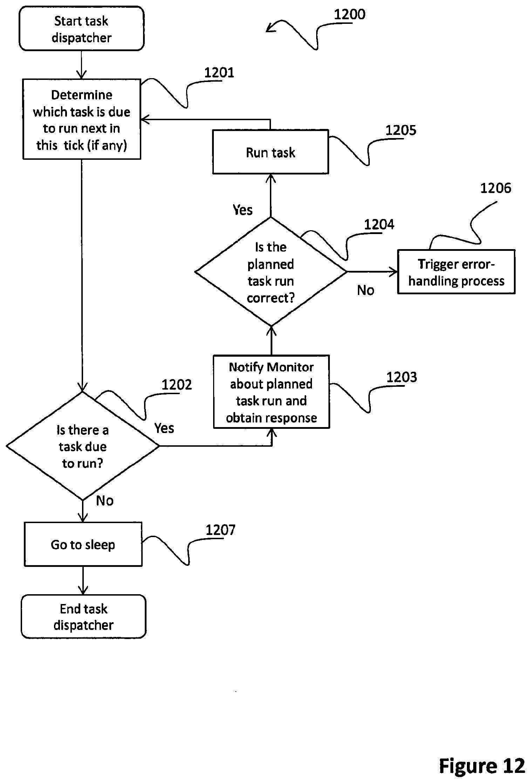

For example, in the event of an error, the Monitor Processor 802 may first request - via the Communication Link B 806 - that the Main Processor 801 performs an orderly shut-down operation, as described (by way of a non-limiting example) in Figure 12 (1200). If the Main Processor 801 continues to execute in these circumstances, the Monitor processor 802 may then attempt to force the Main Processor 801 to halt, by means of the Reset Link 807. Further optionally, the Monitor Processor 802 may remove power from the Main Processor 801 (by means of the System Control output 805) in these and similar circumstances.

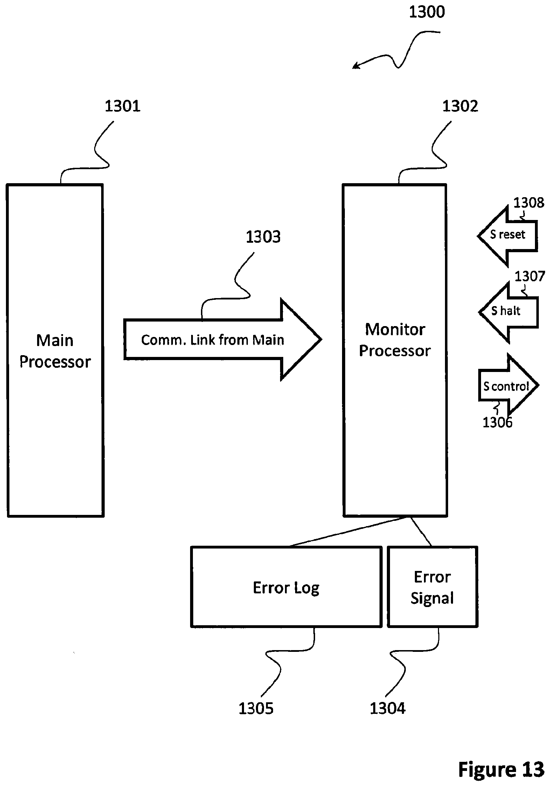

Figure 13 illustrates in schematic form another possible implementation option for the present invention. In the implementation 1300 shown in Figure 13 the Monitor Processor 1302 does not store a representation of the predetermined task schedule but - instead - calculates this schedule at run time. In these circumstances, the Monitor Processor 1302 may execute a version of a time-triggered scheduler driven by the one or more timer "ticks". This time-triggered scheduler may be a time triggered cooperative (TTC) scheduler or a time triggered hybrid (TTH) scheduler: the type of scheduler chosen will probably (but not necessarily) be chosen to match that executing on the Main Processor 1301.

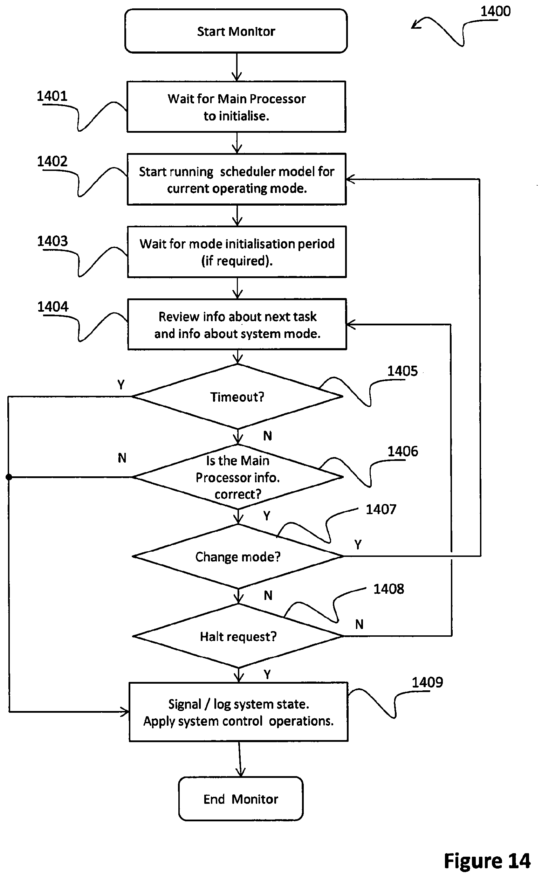

Figure 14 illustrates in schematic form 1400 the operation of software that might be executed on the Monitor Processor 1302 illustrated in Figure 13.

As an example, the code listing below shows a TTC scheduler that might be employed on the Main Processor 1301 that is used in conjunction with the software shown schematically in Figure 14.

```
 int main (void)
    {
    SCH_TTC_Init(); // Set up the scheduler
    // Other init functions
    // ...
    // Add Task_A, Task_B and Task_C to the schedule
    // Parameters: Task name, task offset, task period
    SCH_TTC_Add_Task(Task_A, 0, 10);
    SCH_TTC_Add_Task(Task_B, 0, 15);
    SCH_TTC_Add_Task(Task_C, 0, 33);
    SCH_TTC_Start(); // Start the schedule
    while (1)
        {
        SCH_TTC_Dispatch_Tasks();
        }
    return 1;
    }
```

Part of the corresponding code running on the Monitor Processor 1302 might take the form shown in the listing below:

```
 int main(void)
    {
    SCH_TTC_Monitor_Init(); // Set up the scheduler
    // Other init functions
    // ...
    // Add Task_A, Task_B and Task_C to the schedule
    // Parameters: Task name, task offset, task period
    SCH_TTC_Model_Add_Task(Task_A, 0, 10);
    SCH_TTC_Model_Add_Task(Task_B, 0, 15);
    SCH_TTC_Model_Add_Task(Task_C, 0, 33);
    Next_task_ID = SCH_TTC_Model_Dispatch_Tasks();
    }
```

In this example, a version of the dispatcher function (as used in the Main Processor 1301 and described in detail - for example - in Reference 5) will be used - when required - to determine what task is due to execute next.

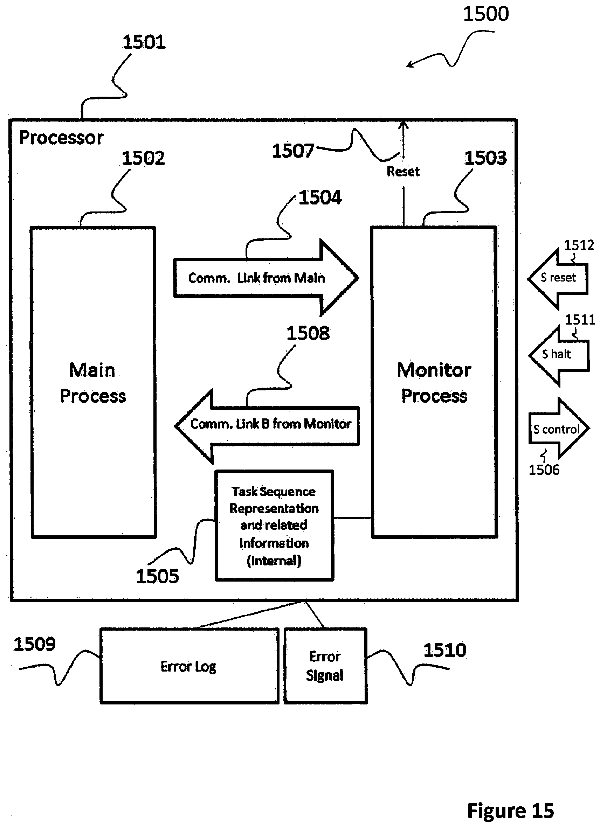

Figure 15 illustrates in schematic form another possible implementation option for the present invention. In the implementation 1500 shown in Figure in which the Main Process 1502 and Monitor Process 1503 execute on a single processor 1501 and the Monitor Process 1503 employs an area of internal memory 1505 to store information about the predetermined Task Sequence Representation.

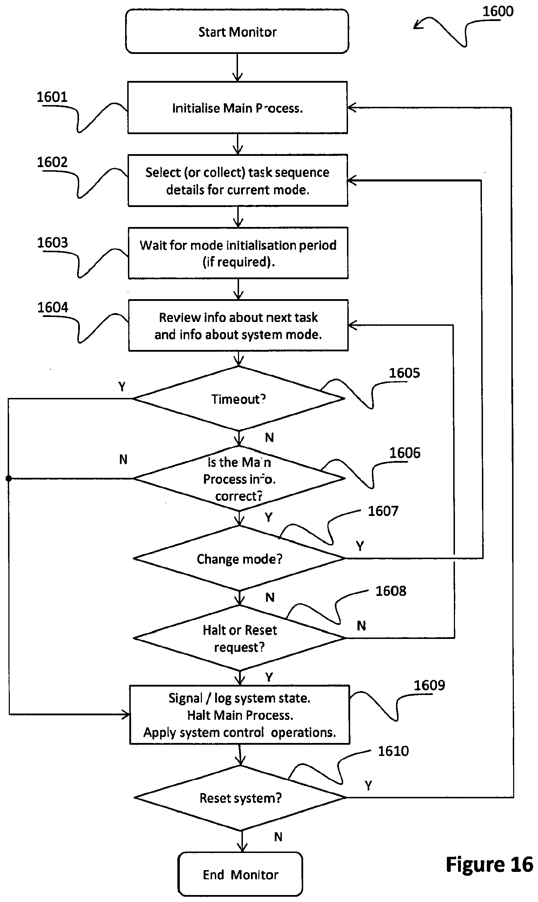

Figure 16 illustrates in schematic form the operation of software that might be executed on the Monitor Process 1503 illustrated in Figure 15.

In Figure 16, the monitoring process 1600 involves initialisation of the Main Process 1601.

Optionally, the initialisation of the Main Process 1502 will be carried out by means of the Control Mechanism. For example, the Monitor Process 1503 may - for example - cause the Main Process 1502 (and the whole processor 1501) to reset by causing overflow of a "watchdog" timer. Alternatively, the Monitor Process 1503 may send a message to the Main Process 1502 requesting that the Main Process 1502 resets itself, by means of Communication Link B 1508.

Optionally, the Monitor Process 1503 will provide information to the Main Process 1502 about the required system state at the time of initialisation. Such information might be provided if the system has been reset because an error has been detected. Information provided may comprise the System Mode (at the time when the error was detected). Optionally, information provided may also comprise the system tick value (at the time when the error was detected). Through use of this information, the Monitor Process 1503 can help to restore the Main Process 1502 to a state very similar to the state before the error occurred. Alternatively, the Monitor Process 1503 may be pre-configured to provide different initialisation information in the event of an error, to ensure that the Main Process operates safely in these circumstances.

Where the Monitor Process 1503 provides information to the Main Process 1502 about the required system state at the time of initialisation, this information may comprise messages delivered via Communication Link B 1508: the system initialisation process may then comprise the system initialisation operation carried out at the start of the function main() 501, 701.

Optionally, the Monitor Process 1503 may trigger an initialisation process and then wait for a fixed period before proceeding.

Optionally, the Main Process 1502 may send a message (over the Communication Link 1504) to indicate that it has completed any initialisation.

The monitoring process 1600 (shown in Figure 16) then involves selection (or collection) of the task sequence details for the current operating mode 1602. The Monitor Process 1503 then waits (if required) until the mode initialisation period is complete 1603, before reviewing information (provided by the Main Process 1502) about the next task and / or System Mode to be executed 1604. If there is - for example - an unexpected delay in providing task or mode information, the Monitor Process 1503 may "timeout" 1605. In the absence of timeout behaviour, action will be taken by the Monitor Process 1503 if the information from the Main Process 1502 about the next task and / or System Mode to be executed is not as anticipated 1606: this may be followed by a change of System Mode 1607, and the processing of system halt or reset requests 1608. In the event of timeout behaviour or the receipt of information from the Main Process 1502 that suggests that the Main Process 1502 is about to perform an action that is not in accordance with the active task schedule, the Monitor Process 1503 may 1609 [i] signal and / or log the system state, and / or [ii] halt the target process, and / or [iii] apply appropriate system control operations via the System Control output 1506. The Monitor Process 1503 may then 1610 reset the computer system.

Throughout the specification, unless the context demands otherwise, the terms 'comprise' or 'include', or variations such as 'comprises' or 'comprising', 'includes' or 'including' will be understood to imply the Inclusion of a stated integer or group of integers, but not the exclusion of any other integer or group of integers.

### References

1. Keith M. Klug, Steven R. Tugenberg "Functional lockstep arrangement for redundant processors", US Patent US5226152 A, 1993.
2. Nahmsuk Oh, Philip P. Shirvani and Edward J. McCluskey, "Control Flow Checking by Software Signatures", Technical Report CRC-TR00-4, Center for Reliable Computing, Stanford University, 2000.
3. M. J. Pont and H.L.R. Ong "Using watchdog timers to improve the reliability of TTCS embedded systems", in Hruby, P. and Soressen, K. E. [Eds.] Proceedings of the First Nordic Conference on Pattern Languages of Programs, September, 2002 ("VikingPloP 2002"), pp.159-200. Published by Micrsoft Business Solutions. ISBN: 87-7849-769-8, 2003.
4. J.-T. Leung and M. Merril. "A note on preemptive scheduling of periodic real-time tasks", Information Processing Letters, 3(11), 1980.
5. M. J. Pont, "Patterns for Time-Triggered Embedded Systems", Addison-Wesley / ACM Press, 2001.
6. M. J. Pont, "Embedded C", Addison-Wesley, 2002.
7. P. Puschner and A. Burns, "Writing temporally predictable Code," in Proceedings of the seventh International Workshop on Object-Oriented Real-Time Dependable Systems, 2002.
8. P. Puschner, "Is WCET Analysis a non-problem? Towards new Software and Hardware architectures," in 2nd International Workshop on Worst Case Execution Time Analysis, Vienna, Austria, June 2002.
9. R. Kirner and P. Puschner, "Discussion of Misconceptions about WCET Analysis," in 3rd Euromicro International workshop on WCET Analysis, 2003.
10. A. K. Gendy and M. J. Pont "Towards a generic 'Single Path Programming' solution with reduced power consumption", in International Design Engineering Technical Conferences & Computers and Information in Engineering Conference IDETC/CIE 2007, Las Vegas, Nevada, USA, 2007.
11. M. J. Pont, S. Kurian, and R. Bautista-Quintero, "Meeting Real-time Constraints Using 'Sandwich Delays'," TPLOP,LNCS, pp. 94-102, 2009.

## Claims

1. A time-triggered computer system (800) comprising:
a Main Processor (801) comprising a time-triggered scheduler adapted to execute one or more tasks according to one or more predetermined task schedules that are determined, validated and verified when the system is designed, and only one of which, an active task schedule, will be active at any point in time; and
a Monitor Processor (802) adapted to determine in advance whether the Main Processor (801) is about to execute a task that is not in accordance with the active task schedule using a Task Sequence Representation (804) comprising a record of a sequence of task executions the Main Processor (801) is expected to follow in the active task schedule; and
a Communication Link (803) for passing information about future task executions between the Main Processor (801) and the Monitor Processor (802); and
a Control Mechanism (807) by means of which the Monitor Processor (802) can halt or reset the Main Processor (801) and shut down, disable, enable or configure connected devices that are under the control of the Main Processor (801), if the Monitor Processor (802) determines that the Main Processor (801) is about to execute a task that is not in accordance with the active task schedule.

2. A computer system (800) according to Claim 1 wherein the Main Processor (801) and the Monitor Processor (802) each comprises one or more "soft" or "hard" processor cores (that execute some software) and / or one or more hardware cores (that do not execute any software).

3. A computer system (800) according to any previous claim wherein the Main Processor (801) and the Monitor Processor (802) are both implemented by means of a single processor chip.

4. A computer system (800) according to any previous claim wherein the Main Processor (801) and the Monitor Processor (802) are implemented by means of separate processor chips.

5. A computer system (800) according to Claim 4 wherein the Main Processor (801) and the Monitor Processor (802) are physically separated.

6. A computer system (800) according to any previous claim wherein the Monitor Processor (802) has access to at least one predetermined Task Sequence Representation (804), this Task Sequence Representation (804) having been determined and stored at a time before the computer system begins to operate.

7. A computer system (800) according to any previous claim wherein the Monitor Processor (802) creates one or more Task Sequence Representations (804) during the system operation.

8. A computer system (800) according to Claim 7 in which the Monitor Processor (802) creates one or more Task Sequence Representations (804) during the system operation by recording the task sequence from the Main Processor (801) at points during the system operation.

9. A computer system (800) according to any previous claim wherein each Task Sequence Representation (804) is stored in one or more data-storage devices.

10. A computer system (800) according to any previous claim wherein the Monitor Processor (802) does not process information about the next task to be executed for every task in the active task schedule.

11. A computer system (800) according to any previous claim wherein the Control Mechanism (807) comprises a System Control output and / or a Reset Link, and / or a Communication Link B.

12. A computer system (800) according to Claim 11 wherein the Monitor Processor (802) attempts to place the Main Processor (801) into a safe state prior to halting the Main Processor (801).

13. A computer system (800) according to any previous claim wherein the Monitor Processor (802) signals an alarm if it determines that the Main Processor (801) is about to execute a task that is not in accordance with the active task schedule.

## Patentansprüche

1. Zeitgesteuertes Computersystem (800), umfassend:
einen Hauptprozessor (801), der einen zeitgesteuerten Planer umfasst, der angepasst ist, um eine oder mehrere vorbestimmte Aufgaben gemäß einem oder mehreren vorbestimmten Aufgabenplänen auszuführen, die bestimmt, validiert und verifiziert werden, wenn das System entworfen wird, und von denen nur einer, ein aktiver Aufgabenplan, zu einem beliebigen Zeitpunkt aktiv ist; und
einen Überwachungsprozessor (802), der angepasst ist, um im Voraus zu bestimmen, ob der Hauptprozessor (801) im Begriff ist, eine Aufgabe auszuführen, die nicht dem aktiven Aufgabenplan entspricht, unter Verwendung einer Aufgabensequenzdarstellung (804), die eine Aufzeichnung einer Sequenz von Aufgabenausführungen umfasst, der der Hauptprozessor (801) voraussichtlich in dem aktiven Aufgabenplan folgen wird; und
eine Kommunikationsverbindung (803) zum Weiterleiten von Informationen über zukünftige Aufgabenausführungen zwischen dem Hauptprozessor (801) und dem Überwachungsprozessor (802); und
einen Steuermechanismus (807), mit dessen Hilfe der Überwachungsprozessor (802) den Hauptprozessor (801) anhalten oder zurücksetzen und verbundene Vorrichtungen, die unter der Steuerung des Hauptprozessors (801) stehen, herunterfahren, deaktivieren, aktivieren oder konfigurieren kann, wenn der Überwachungsprozessor (802) bestimmt, dass der Hauptprozessor (801) im Begriff ist, eine Aufgabe auszuführen, die nicht dem aktiven Aufgabenplan entspricht.

2. Computersystem (800) nach Anspruch 1, wobei der Hauptprozessor (801) und der Überwachungsprozessor (802) jeweils einen oder mehrere "weiche" oder "harte" Prozessorkerne (die einen Teil von Software ausführen) und/oder einen oder mehrere Hardwarekerne (die keine Software ausführen) umfassen.

3. Computersystem (800) nach einem vorhergehenden Anspruch, wobei der Hauptprozessor (801) und der Überwachungsprozessor (802) beide mittels eines einzelnen Prozessorchips implementiert sind.

4. Computersystem (800) nach einem vorhergehenden Anspruch, wobei der Hauptprozessor (801) und der Überwachungsprozessor (802) mittels separater Prozessorchips implementiert sind.

5. Computersystem (800) nach Anspruch 4, wobei der Hauptprozessor (801) und der Überwachungsprozessor (802) physikalisch getrennt sind.

6. Computersystem (800) nach einem vorhergehenden Anspruch, wobei der Überwachungsprozessor (802) Zugriff auf wenigstens eine vorbestimmte Aufgabensequenzdarstellung (804) aufweist, wobei diese Aufgabensequenzdarstellung (804) zu einem Zeitpunkt bestimmt worden sind, bevor das Computersystem begonnen hat, zu arbeiten.

7. Computersystem (800) nach einem vorhergehenden Anspruch, wobei der Überwachungsprozessor (802) während des Systembetriebs eine oder mehrere Aufgabensequenzdarstellungen (804) erstellt.

8. Computersystem (800) nach Anspruch 7, wobei der Überwachungsprozessor (802) während des Systembetriebs eine oder mehrere Aufgabensequenzdarstellungen (804) erstellt, indem er die Aufgabensequenz von dem Hauptprozessor (801) an Punkten während des Systembetriebs aufzeichnet.

9. Computersystem (800) nach einem vorhergehenden Anspruch, wobei jede Aufgabensequenzdarstellung (804) in einer oder mehreren Datenspeichervorrichtungen gespeichert ist.

10. Computersystem (800) nach einem vorhergehenden Anspruch, wobei der Überwachungsprozessor (802) keine Informationen über die nächste auszuführende Aufgabe für jede Aufgabe in dem aktiven Aufgabenplan verarbeitet.

11. Computersystem (800) nach einem vorhergehenden Anspruch, wobei der Steuermechanismus (807) einen Systemsteuerungsausgang und/oder eine Rücksetzverbindung und/oder eine Kommunikationsverbindung B umfasst.

12. Computersystem (800) nach Anspruch 11, wobei der Überwachungsprozessor (802) versucht, den Hauptprozessor (801) in einen sicheren Zustand zu versetzen, bevor der Hauptprozessor (801) angehalten wird.

13. Computersystem (800) nach einem vorhergehenden Anspruch, wobei der Überwachungsprozessor (802) einen Alarm signalisiert, wenn er bestimmt, dass der Hauptprozessor (801) im Begriff ist, eine Aufgabe auszuführen, die nicht dem aktiven Aufgabenzeitplan entspricht.

## Revendications

1. Système informatique à déclenchement temporel (800) comprenant :
un processeur principal (801) comprenant un ordonnanceur à déclenchement temporel adapté pour exécuter une ou plusieurs tâches selon une ou plusieurs planifications de tâches prédéfinies qui sont déterminées, validées et vérifiées lors de la conception du système, et dont une seule, une planification de tâche active, sera active à n'importe quel moment ; et
un processeur de surveillance (802) adapté pour déterminer à l'avance si le processeur principal (801) est sur le point d'exécuter une tâche qui n'est pas conforme à la planification de tâche active à l'aide d'une représentation de séquence de tâches (804) comprenant un enregistrement d'une séquence d'exécutions de tâches que le processeur principal (801) est censé suivre dans la planification de tâche active ; et
une liaison de communication (803) permettant de transmettre des informations concernant les exécutions de tâches futures entre le processeur principal (801) et le processeur de surveillance (802) ; et
un mécanisme de commande (807) au moyen duquel le processeur de surveillance (802) peut arrêter ou remettre à zéro le processeur principal (801) et éteindre, désactiver, activer ou configurer les dispositifs connectés qui sont sous la commande du processeur principal (801), si le processeur de surveillance (802) détermine que le processeur principal (801) est sur le point d'exécuter une tâche qui n'est pas conforme à la planification de tâche active.

2. Système informatique (800) selon la revendication 1, ledit processeur principal (801) et ledit processeur de surveillance (802) comprenant chacun un ou plusieurs cœurs de processeur « souples » ou « durs » (qui exécutent certains logiciels) et/ou un ou plusieurs cœurs de matériels (qui n'exécutent aucun logiciel).

3. Système informatique (800) selon l'une quelconque des revendications précédentes, ledit processeur principal (801) et ledit processeur de surveillance (802) étant tous deux mis en œuvre au moyen d'une seule puce de processeur.

4. Système informatique (800) selon l'une quelconque des revendications précédentes, ledit processeur principal (801) et ledit processeur de surveillance (802) étant mis en œuvre au moyen de puces de processeur séparées.

5. Système informatique (800) selon la revendication 4, ledit processeur principal (801) et ledit processeur de surveillance (802) étant physiquement séparés.

6. Système informatique (800) selon l'une quelconque des revendications précédentes, ledit processeur de surveillance (802) ayant accès à au moins une représentation de séquence de tâches prédéfinie (804), cette représentation de séquence de tâches (804) ayant été déterminée et stockée à un moment avant que le système informatique ne commence à fonctionner.

7. Système informatique (800) selon l'une quelconque des revendications précédentes, ledit processeur de surveillance (802) créant une ou plusieurs représentations de séquence de tâches (804) durant le fonctionnement du système.

8. Système informatique (800) selon la revendication 7, ledit processeur de surveillance (802) créant une ou plusieurs représentations de séquence de tâches (804) durant le fonctionnement du système en enregistrant la séquence de tâches provenant du processeur principal (801) à des points durant le fonctionnement du système.

9. Système informatique (800) selon l'une quelconque des revendications précédentes, chaque représentation de séquence de tâches (804) étant stockée dans un ou plusieurs dispositifs de stockage de données.

10. Système informatique (800) selon l'une quelconque des revendications précédentes, ledit processeur de surveillance (802) ne traitant pas les informations concernant la tâche suivante à exécuter pour chaque tâche dans la planification de tâche active.

11. Système informatique (800) selon l'une quelconque des revendications précédentes, ledit mécanisme de commande (807) comprenant une sortie de commande de système et/ou une liaison de réinitialisation, et/ou une liaison de communication B.

12. Système informatique (800) selon la revendication 11, ledit processeur de surveillance (802) tentant de placer le processeur principal (801) dans un état sécurisé avant d'arrêter le processeur principal (801).

13. Système informatique (800) selon l'une quelconque des revendications précédentes, ledit processeur de surveillance (802) signalant une alarme s'il détermine que le processeur principal (801) est sur le point d'exécuter une tâche qui n'est pas conforme à la planification de tâche active.
